# EUROPÄISCHE PATENTSCHRIFT

(11) **EP 1 309 210 B1**
(45) Veröffentlichungstag und Bekanntmachung des Hinweises auf die Patenterteilung: **15.02.2006**
(21) Anmeldenummer: 02024942.1
(22) Anmeldetag: 06.11.2002
(51) Int. Cl.: H04Q 3/62

(54) **Betriebsverfahren und System zur Weiterleitung eingehender Anrufe in einem auf dem QSIG Standard basierenden Telekommunikationsnetz**
Method and system for redirecting incoming calls in a QSIG-standard based telecommunication network
Procédé et système pour la distribution d'appels dans un réseau de communication basé sur le standard QSIG

(30) Priorität: 06.11.2001 DE 10154327
(43) Veröffentlichungstag der Anmeldung: 07.05.2003
(73) Patentinhaber: Tenovis GmbH & Co. KG, 60326 Frankfurt (DE)
(72) Erfinder: Pohler, Walter, 41564 Karst (DE); Rauth, Hermann, 46145 Oberhausen (DE); Hempel, Harald, 45133 Essen (DE)
(74) Vertreter: Heinze, Ekkehard

(56) Entgegenhaltungen:
- EP-A- 0 876 041
- EP-A- 1 035 737
- WO-A-01/10141
- WO-A-01/41465
- US-A- 5 903 571
- "Call diversion supplementary services for H.323; ITU-T Recommendation H.450.3" ITU-T RECOMMENDATION H.450.3,

## Beschreibung

Die Erfindung betrifft ein Betriebsverfahren eines Telekommunikationssystems mit einer Mehrzahl von ersten Vermittlungseinrichtungen, die einer Mehrzahl von ersten Telekommunikationsanlagen zugeordnet sind, gemäß dem Oberbegriff des Patentanspruches 1 und ein Telekommunikationssystem gemäß dem Oberbegriff des Patentanspruches 9.

Verfahren zur Verteilung von Anrufen sind aus herkömmlichen Telekommunikationsanlagen (privaten Nebenstellenanlagen, PBX) bekannt, die in der Regel Vermittlungseinrichtungen zum Vermitteln ein- oder ausgehender Anrufe an ein internes oder externes Telekommunikationsendgerät oder eine weitere Telekommunikationsanlage aufweisen. Derartige Vermittlungseinrichtungen können von die Gespräche vermittelnden Personen bedient werden. Damit jeder eingehende Anruf einer momentan betriebsbereiten Vermittlungseinrichtung zugeordnet werden kann, weist die Telekommunikationsanlage eine Steuereinrichtung zur Verteilung der Anrufe auf verschiedene Vermittlungseinrichtungen (Vermittlungsplätze) auf.

Zur Speicherung von Daten derjenigen Vermittlungseinrichtungen, die momentan - beispielsweise aufgrund einer Nachtschaltung - nicht betriebsbereit sind, weisen die Telekommunikationsanlagen lokale Datenspeicher (Datenbasen) auf, deren Auslesen der Steuereinrichtung das Verteilen der eingehenden Anrufe auf momentan betriebsbereite Vermittlungseinrichtungen ermöglicht.

Bisher ist die Anwendung eines Leistungsmerkmals "Anrufverteilung" in QSIG-Netzen auf Vermittlungseinrichtungen beschränkt, die einem gemeinsamen Netzknoten, wie beispielsweise einer Telekommunikationsanlage, zugeordnet sind. Sind jedoch sämtliche Vermittlungseinrichtungen - beispielsweise aufgrund ihrer Nachtschaltung - außer Betrieb, so können eingehende Anrufe weder verteilt noch weiter vermittelt werden.

QSIG (Signalisierung am Q-Referenzpunkt) und PSS 1 (Private Integrated Signaling System Number 1) bezeichnen Signalisierungsverfahren, die international und für den europäischen Raum standardisiert sind, wobei die Begriffe QSIG und PSS 1 als Synonyme auftreten. Die Standardisierung erfolgt auf internationaler Ebene durch ISO/IEC und im europäischen Raum durch ETSI und ECMA, wobei eine gegenseitige Harmonisierung der Standards angestrebt wird. QSIG ist offen für Hersteller von Telekommunikationsanlagen. Es ermöglicht daher insbesondere die Signalisierung und damit Kommunikation zwischen privaten Telekommunikationsanlagen von verschiedenen Herstellern, sofern diese Telekommunikationsanlagen nach QSIG-Standard signalisieren. QSIG bzw. PSS 1 definieren ein ISDN für die Teilnehmer eines privaten Kommunikationsnetzes.

Folgende Standards beschreiben die grundlegende Kommunikation bei QSIG, die sog. BasicCalls: ETS 300 172 Edition 3, ISO/IEC 115 72 Edition 2 und ECMA 143 3^{rd} Edition. Im Standard sind die Basisfunktionen der Signalisierung definiert. Zusätzliche Funktionen (im internationalen Sprachgebrauch: Supplementary Services) sind als weitere Zusatzdienste für QSIG spezifiziert. Diese Supplementary Services können ebenso wie zusätzliche standardisierte Leistungsmerkmale mittels sogenannter "Generic Functions" auf BasicCalls ähnlich einem Baukastenprinzip aufgesetzt werden. Hierbei stellen die Generic Functions Signalisierungsprotokolle für den Transport von Protokoll-Informationen dar, die Teil eines Supplementary Services oder eines Leistungsmerkmals (Additional Network Features - ANF) in dem privaten Telekommunkationsnetz sind. Folgende Standards beschreiben die Generic Functions: ETS 300 239 Edition 2, ISO/IEC 11582 Edition 1 und ECMA 165.

Keines des bisher bekannten Leistungsmerkmale bzw. Supplementary Services ermöglicht einen innerhalb eines auf QSIG-Standard basierenden Kommunikationsnetzes angeordneten Telekommunikationsanlage das Verteilen von eingehenden Anrufen, wenn die mit der Telekommunikationsanlage unmittelbar verbundenen Vermittlungseinrichtungen momentan außer Betrieb sind.

Demzufolge liegt der vorliegenden Erfindung die Aufgabe zugrunde, ein gattungsgemäßes Verfahren zur Verfügung zu stellen, welches die Verteilung von Anrufen auch dann in einem auf QSIG-Standard basierenden Kommunikationsnetz ermöglicht, wenn die mit der Telekommunikationsanlage verbundenen Vermittlungseinrichtungen momentan außer Betrieb sind. Der Erfindung liegt ebenso die Aufgabe zugrunde, ein Telekommunikationssystem zur Durchführung des Verfahrens zur Verfügung zu stellen.

Diese Aufgabe wird verfahrensseitig durch die Merkmale des Patentanspruches 1 und vorrichtungsseitig durch die Merkmale des Patentanspruches 9 gelöst.

Aus der EP-A-0 876 041 ist ein Verfahren nach dem Oberbegriff des Anspruchs 1 und ein zu dessen Ausführung geeignetes Telekommunikationssystem bekannt: Aus der WO 01/10141 ist bekannt, dass bei einem auf QSIG-Standard beruhenden Telekommunikationssystem eine zentrale Anrufverteilung mittels einer zentral angeordneten TK-Anlage erfolgen kann.

Ein wesentlicher Punkt der Erfindung ist die Übertragung einer Aktivierungsinformation von einer in einem Kommunikationsnetz zentral angeordneten Telekommunikationsanlage (zentrale Telekommunikationsanlage) an die mit der zentralen Telekommunikationsanlage verbundenen Telekommunikationsanlagen (Satelliten-TK-Anlagen), um in sämtlichen Telekommunikationsanlagen eine zentrale Anrufverteilung einzurichten. Mittels einer derartigen zentralen Anrufverteilung werden Anrufe, die an ersten Vermittlungseinrichtungen (Vermittlungs- bzw. Agenturarbeitsplätzen) einer Satelliten-TK-Anlage eingehen, automatisch an die zentral angeordnete Telekommunikationsanlage zur Weiterleitung an eine mit dieser zentralen TK-Anlage verbundenen zweiten Vermittlungseinrichtung umgeleitet. Bei einer Umleitung der Anrufe an Vermittlungsplätze, die mit der zentralen Telekommunikationsanlage poolmäßig verbunden sind, ist die Wahrscheinlichkeit, dass der eingehende Anruf an eine momentan betriebsbereite Vermittlungsstelle umgeleitet wird, wesentlich höher. Denn eine zentral angeordnete Telekommunikationsanlage kann auf ein Netz von Vermittlungsstellen (Vermittlungsplätze) zurückgreifen, die weltweit verteilt sind und demzufolge untereinander zeitverschobene Nacht- bzw. Tagschaltungen aufweisen.

Die Übertragung der Aktivierungsinformation findet vorteilhaft als Signalisierungsdaten über eine D-Kanalverbindung in auf QSIG-Standard basierenden Verbindungen statt.

Sobald die Signalisierungsdaten des proprietären Merkmals "Aktivieren der zentralen Anrufverteilung über QSIG-Leitungen" mittels der ROSE-Operation zavActivate in einer SETUP-Meldung und einer CONNECT-Meldung zwischen der zentral angeordneten TK-Anlage und den Satelliten-TK-Anlagen übertragen worden sind, werden die in den Satelliten-TK-Anlagen zuvor eingerichteten Leistungsmerkmale zum Verteilen der Anrufe auf die Satelliten-Vermittlungsstellen deaktiviert und stattdessen das proprietäre Merkmal "Aktivieren der zentralen Anrufverteilung über QSIG-Leitungen" eingerichtet. Auf diese Weise findet eine Umleitung sämtlicher in den den Satelliten-TK-Anlagen zugeordneten Satelliten-Vermittlungseinrichtungen eingehenden Anrufen auf die der zentral angeordneten Telekommunikationsanlage zugeordneten Vermittlungseinrichtungen statt.

Gemäß einer bevorzugten Ausführungsform wird der erste Anruf, der nach einer Abschaltung des proprietären Merkmals "Aktivieren der zentralen Anrufverteilung über QSIG-Leitungen" in der zentral angeordneten Telekommunikationsanlage an diese umgeleitet wird, an die umleitende Satelliten-TK-Anlage zurückgesendet. Gleichzeitig mit dieser Rücksendung wird die Satelliten-TK-Anlage über die Deaktivierung des properitären Merkmals informiert. Es werden Informationsdaten über die Abschaltung der zentralen Anrufverteilung mittels der auf QSIG-Standard basierenden Meldung DISCONNECT von der zentral angeordneten TK-Anlage an die umleitende Satelliten-TK-Anlage und jede weitere Satelliten-TK-Anlage, in welcher das Merkmal der zentralen Anrufverteilung eingerichtet war, gesendet. Diese Informationsdaten werden mittels der ROSE-Operation zavReturnCall übertragen. Nach Empfang einer derartigen ROSE-Operation in der Satelliten-TK-Anlage sendet diese jeweils eine Deaktivierungsnachricht an jede mit der Anlage verbundene Vermittlungseinrichtung. Auf diese Weise wird bei Auftreten einer Abschaltung bzw. Deaktivierung des proprietären Merkmals "Aktivieren der zentralen Anrufverteilung über QSIG-Leitungen" in jeder Satelliten-TK-Anlage automatisch eine Umschaltung von zentraler Anrufverteilung auf Anrufverteilung innerhalb der Satelliten-TK-Anlage durchgeführt.

Ein Telekommunikationssystem zur Durchführung des erfindungsgemäßen Verfahrens umfaßt vorteilhaft ein proprietäres Merkmal, welches das Senden einer Aktivierungsinformation zur Aktivierung einer zentralen Anrufverteilung von der zentral angeordneten TK-Anlage an sämtliche damit verbundenen Satelliten-TK-Anlagen veranlaßt. Anschließend wird die zentrale Anrufverteilung in jeder TK-Anlage anstelle der zuvor eingerichteten Satelliten-TK-Anlagen eine interne Anrufverteilung eingerichtet. Da die Übertragung der Aktivierungsinformation mittels auf QSIG-Standard basierenden Meldungen durchgeführt wird, kann eine derartige zentrale Anrufverteilung auch in QSIG-basierten Kommunikationsnetzen durchgeführt werden.

Gemäß einer bevorzugten Ausführungsform weist das Telekommunikationssystem auf QSIG-Standard basierende IP-Gateways für den Zugang zum Internet auf. Auf diese Weise kann die Aktivierungsinformation für das proprietäre Merkmal auch über Netzverbindungen übertragen werden, die nur teilweise aus auf QSIG-Standard basierenden Netzleitungen bestehen.

Die Verbindungen zur Übertragung der auf QSIG-Standard basierenden Meldungen können QSIG-Festverbindungen und/oder QSIG-Wählverbindungen sein.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: eine schematische Darstellung eines Telekommunikationssystems zur Durchführung des erfindungsgemäßen Verfahrens;
- Fig. 2: eine schematische Darstellung eines Verfahrensablaufs der Aktivierung einer zentral Anrufverteilung gemäß dem erfindungsgemäßen Verfahren.
- Fig. 3: eine schematische Darstellung eines Verfahrensablaufs der Deaktivierung einer Anrufverteilung gemäß dem erfindungsgemäßen Verfahren und
- Fig. 4a und 4b: Darstellungen der formalen Beschreibung des erfindungsgemäßen Verfahrens in einer QSIG- üblichen Form.

In der nachfolgenden Beschreibung werden für gleich und gleichwirkende Teile dieselben Bezugsziffern verwendet.

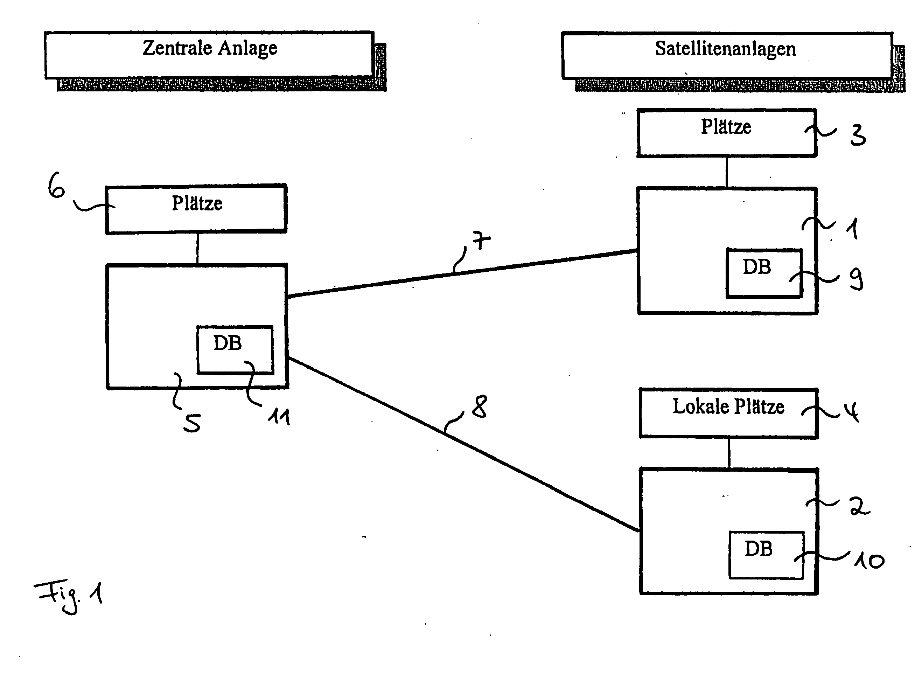

Fig. 1 zeigt die schematische Darstellung eines Telekommunikationssystems zur Durchführung des erfindungsgemäßen Verfahrens. Gemäß Fig. 1 sind Satelliten-TK-Anlagen 1 und 2 jeweils mit ihnen unmittelbar zugeordneten Vermittlungsplätzen (Vermittlungseinrichtungen) 3 und 4 verbunden. Eine in einem Telekommunikationsnetz zentral angeordnete Anlage 5 weist ihr unmittelbar zugeordnete Vermittlungsplätze 6 auf.

Die zentral angeordnete TK-Anlage 5 ist über zwei auf QSIG-Standard basierende Verbindungen 7 und 8 mit den Satelliten-TK-Anlagen 1 und 2 verbunden.

Jede der Telekommunikationsanlagen 1, 2 und 5 weist einen Datenspeicher 9, 10 und 11 mit einer Datenbasis (DB) auf, die Daten über die Betriebsbereitschaft der jeweils zugeordneten Vermittlungsplätze 3, 4 und 6 und ihren momentanen Beleg-Zustand beinhalten.

Sobald einer der Vermittlungsplätze 6, welcher der zentral angeordneten TK-Anlage 5 zugeordnet ist, in Betrieb genommen wird, wird eine Aktivierungsinformation über die Aktivierung einer zentralen Anrufverteilung automatisch mittels auf QSIG-Standard basierenden Meldungen über die Kommunikationsverbindung 7 und 8 an beide Satelliten-TK-Anlagen 1 und 2 gesendet. Eine in der Fig. 1 nicht dargestellte Steuereinrichtung, die in jeder der TK-Anlagen 1 und 2 angeordnet ist, schaltet die TK-Anlage 1 und 2 von einem Modus der Satelliten-TK-Anlage internen Anrufverteilung auf einen Modus der zentralen Anrufverteilung über die zentrale Anlage 5 um. Auf diese Weise werden sämtliche in den Vermittlungsplätzen 3 und 4 eintreffende Anrufe auf die Vermittlungsplätze 6 der zentralen TK-Anlage 5 umgeleitet. Eine in der Fig. 1 nicht gezeigte in der zentral angeordneten TK-Anlage 5 eingerichtete Steuereinrichtung greift auf die Daten des Datenspeichers 11 zurück, in welchem u.a. Steuerungsdaten zur Steuerung der Steuereinrichtungen und Datenspeicher 9, 10 der Satelliten-TK-Anlagen 1 und 2 enthält. Auf diese Weise werden die an den Vermittlungsplätzen 3 und 4 eingehenden Anrufe mittels der in den TK-Anlagen 1, 2 und 5 eingerichteten Steuereinrichtungen über die QSIG-basierten Kommunikationsverbindungen 7 und 8 an die zentral angeordnete TK-Anlage 5 zur Weiterleitung an die Vermittlungsplätze 6 umgeleitet.

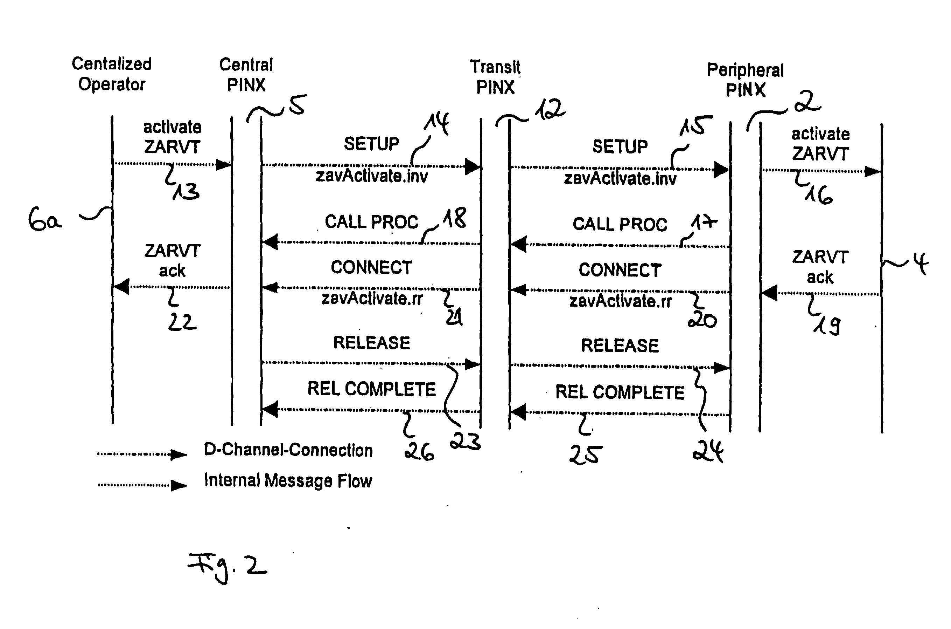

Fig. 2 zeigt in einer schematischen Darstellung einen Verfahrensablauf der Aktivierung der zentralen Anrufverteilung gemäß einer Ausführungsform der Erfindung. Zur Aktivierung der zentralen Anrufverteilung wird von einer Steuereinrichtung 6a, die von einem Teilnehmer bedient werden kann, ein Aktivierungssignal 13 an die zentral angeordnete TK-Anlage 5 gesendet. Dieses Aktivierungssignal wird mittels einer ROSE-Operation zavActivate in einer auf QSIG-Standard basierenden Meldung SETUP 14 und 15 von der Anlage 5 zu einer Transitanlage 12 und einer Satelliten-TK-Anlage 2 gesendet. Die Satelliten-TK-Anlage 2 gibt die übertragene Aktivierungsinformation mittels des Aktivierungssignals zavActivate an die Vermittlungsplätze 4 weiter.

Die Satelliten-TK-Anlage 2 sendet eine Meldung CALL PROC 17 und 18 an die zentral angeordnete TK-Anlage 5 zurück und bestätigt mit der QSIG-Meldung CONNECT 20 und 21 sowie den internen Nachrichten zavActivate 19 und 22 der Steuereinrichtung 6a den Aufbau einer Verbindung im Rahmen der Aktivierung einer zentralen Anrufverteilung über QSIG-Leitungen. Anschließend wird die Verbindung mittels der Meldungen RELEASE 23 und 24 und RELEASE COMPLETE 25 und 26, die ebenso wie die weiteren QSIG-basierten Meldungen als in einer D-Kanalverbindung übertragene Signalisierungsdaten übertragen werden, abgebaut.

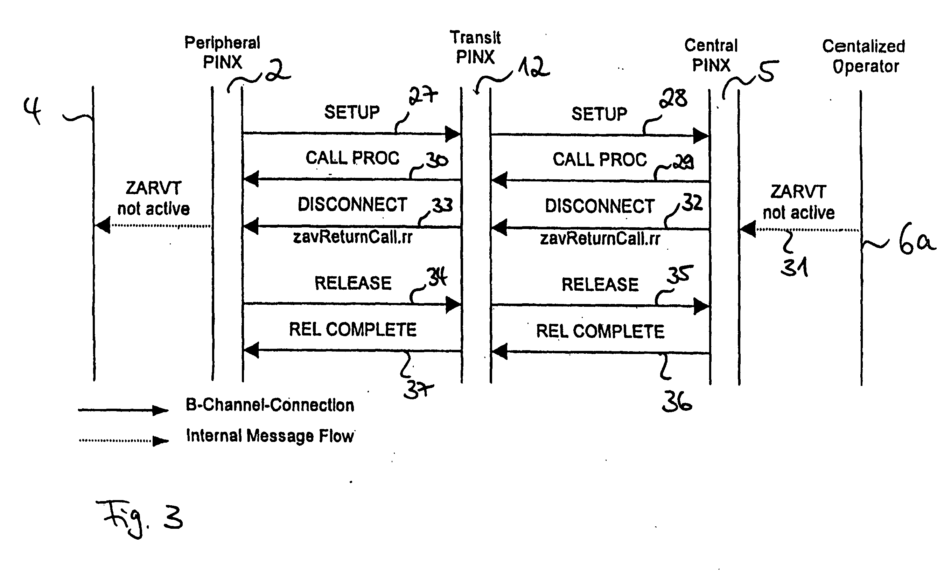

Fig. 3 zeigt in einer schematischen Darstellung einen Verfahrensablauf der Deaktivierung einer zentralen Anrufverteilung gemäß einer Ausführungsform der Erfindung. Mittels der QSIG-basierten Meldungen SETUP 27 und 28 und CALL PROC 29 und 30 wird eine Verbindung zwischen der Satelliten-TK-Anlage 2, der Transit-TK-Anlage 12 und der zentral angeordneten TK-Anlage 5 aufgebaut. Anschließend wird von der Steuereinrichtung 6a - nach Abschaltung der zentralen Anrufverteilung durch einen Teilnehmer - eine Deaktivierungsnachricht 31 ausgegeben. Die zentral angeordnete TK-Anlage 5 überträgt mittels einer ROSE-Operation zav-ReturnCall und der QSIG-basierten Meldung DISCONNECT 32, 33 die Deaktivierungsnachricht an die Satelliten-TK-Anlage 2, welche diese an die einzelnen Vermittlungsplätze 4 weitergibt. Anschließend werden zwischen den TK-Anlagen 2, 5 und 12 RELEASE-Meldungen 34 und 35 sowie RELEASE-COMPLETE-Meldungen 36 und 37 zum Abbau der Verbindungen übertragen. Sämtliche zwischen den TK-Anlagen übertragene Meldungen werden in einer B-Kanal-Verbindung übertragen.

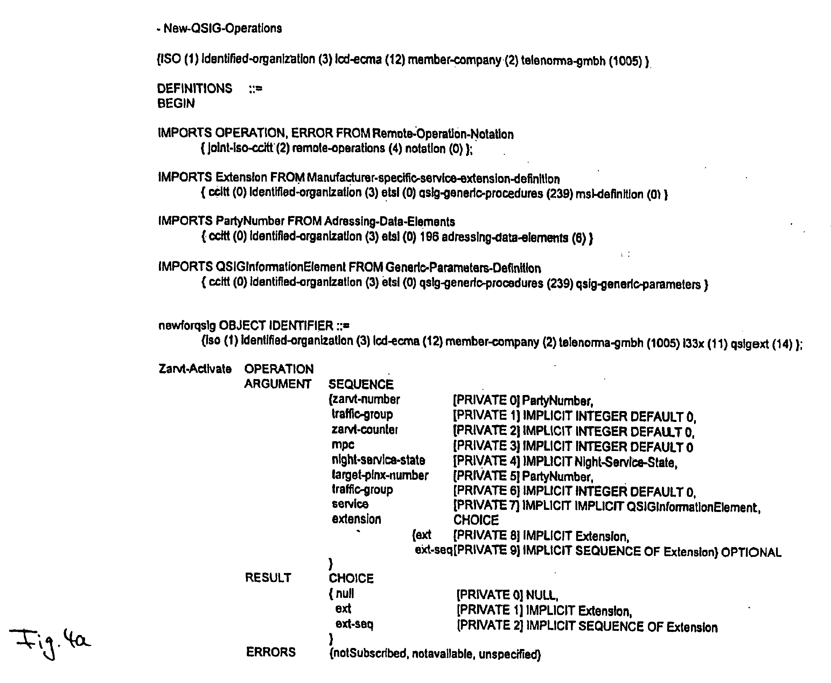

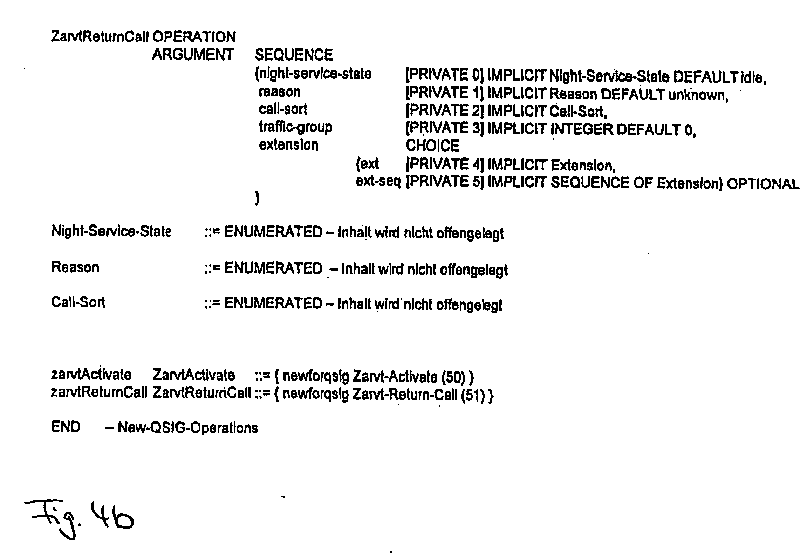

Die einzelnen Operationen für das erfindungsgemäße Verfahren lassen sich im Detail aus der Tabelle gemäß den Figuren 4a und 4b entnehmen.

### Bezugszeichenliste

- 1, 2: Satelliten-Telekommunikationsanlagen
- 3, 4, 6: Vermittlungsplätze
- 5: zentral angeordnete Telekommunikationsanlage
- 6a: Vermittungsplätze, Steuereinrichtung
- 7, 8: Auf QSIG-Standard basierende Kommunikationsverbindungen
- 9, 10, 11: Datenspeicher
- 12: Transit-TK-Anlage
- 13, 16: Aktivierungsnachricht
- 14, 15: SETUP-Meldung
- 17, 18,: CALL PROC-Meldung
- 19, 22: Bestätigungsnachricht
- 20, 21: CONNECT-Meldung
- 23, 24: RELEASE-Meldung
- 25, 26: RELEASE-COMPLETE-Meldung
- 27, 28: SETUP-Meldung
- 29, 30: CALL PROC-Meldung
- 31: Deaktivierungsnachricht
- 32, 33: DISCONNECT-Meldung
- 34, 35: RELEASE-Meldung
- 36, 37: RELEASE-COMPLETE-Meldung

## Patentansprüche

1. Betriebsverfahren eines Telekommunikationssystems mit einer Mehrzahl von dezentralen Vermittlungseinrichtungen (3, 4), die einer Mehrzahl von in einem Telekommunikationsnetz dezentral angeordneten Telekommunikationsanlagen(1, 2) zugeordnet sind, wobei eingehende Anrufe auf Vermittlungseinrichtungen (3, 4) verteilt werden, wobei eine zentrale Anrufverteilung mittels einer zentral angeordneten Telekommunikationsanlage (5) erfolgt, **dadurch gekennzeichnet, dass** zu deren Aktivierung eine Aktivierungsinformation mittels einer auf QSIG-Standard basierenden SETUP-Meldung von der zentral angeordneten Telekommunikationsanlage (5) an jede dezentral angeordnete Telekommunikationsanlage (1, 2) übertragen wird, welche in Reaktion hierauf die eingehenden Anrufe an die zentral angeordnete Telekommunikationsanlage (5) zur Weiterleitung an mindestens eine zentrale Vermittlungseinrichtung (6) umleitet, die mit der zentral angeordneten Telekommunikationsanlage (5) verbunden ist.

2. Verfahren nach Anspruch 1,
**dadurch gekennzeichnet, dass**
die Aktivierungsinformation nach Aktivierung einer aus einer Mehrzahl von zentralen Vermittlungseinrichtungen (6) von der zentral angeordneten Telekommunikationsanlage (5) an jede dezentral angeordnete Telekommunikationsanlage (1, 2) übertragen wird.

3. Verfahren nach Anspruch 1 oder 2,
**dadurch gekennzeichnet, dass**
die umgeleiteten Anrufe von der zentralen Vermittlungseinrichtung (6) an die den Anruf umleitende dezentral angeordnete Telekommunikationsanlage (1, 2) zurückgesendet werden, wenn die zentrale Anrufverteilung in der zentral angeordneten Telekommunikationsanlage (5) abgeschaltet wird.

4. Verfahren nach Anspruch 3,
**dadurch gekennzeichnet, dass**
die den Anruf umleitende dezentral angeordnete Telekommunikationsanlage (1, 2) Informationsdaten über die Abschaltung der zentralen Anrufverteilung mittels der auf QSIG-Standard basierenden Meldung DISCONNECT von der zentral angeordneten Telekommunikationsanlage (5) empfängt.

5. Verfahren nach Anspruch 4,
**dadurch gekennzeichnet, dass**
nach dem Empfang der Informationsdaten eingehende Anrufe ohne Umleitung an die zentral angeordnete Telekommunikationsanlage (5) an die dezentralen Vermittlungseinrichtungen (3, 4) und/oder Endgeräte weitergeleitet werden.

6. Verfahren nach einem der vorangegangenen Ansprüche,
**dadurch gekennzeichnet, dass**
die Aktivierungsinformation mittels einer ROSE-Operation zavActivate (14, 15) von der zentral angeordneten Telekommunikationsanlage (5) an die dezentral angeordneten Telekommunikationsanlagen (1, 2) gesendet wird.

7. Verfahren nach einem der Ansprüche 3-6,
**dadurch gekennzeichnet, dass**
die umgeleiteten Anrufe mittels der ROSE-Operation zavReturnCall (32, 33) von der zentral angeordneten Telekommunikationsanlage (5) zu der den Anruf umleitenden dezentral angeordneten Telekommunikationsanlage (1, 2) zurückgeleitet wird.

8. Verfahren nach einem der vorangegangenen Ansprüche,
**dadurch gekennzeichnet, dass**
die Aktivierungsinformation als Signalisierungsdaten über eine D-Kanalverbindung übertragen wird.

9. Telekommunikationssystem zur Durchführung des Verfahrens nach einem der vorangegangenen Ansprüche, **gekennzeichnet durch**
ein Leistungsmerkmal, welches eine zentrale Anrufverteilung mittels einer zentral angeordneten Telekommunikationsanlage durchführt, wobei eine Aktivierungsinformation zur Aktivierung der zentralen Anrufverteilung mittels einer auf QSIG-Standard basierenden SETUP-Meldung von der zentral angeordneten Telekommunikationsanlage (5) an dezentral angeordnete Telekommunikationsanlagen (1, 2) übertragen wird, um in Reaktion hierauf an den dezentral angeordneten Telekommunikationsanlagen (1, 2) eingehende Anrufe an die zentral angeordnete Telekommunikationsanlage (5) zur Weiterleitung an mindestens eine mit der zentral angeordneten Telekommunikationsanlage (5) verbundene zentrale Vermittlungseinrichtung (6) umzuleiten.

10. Telekommunikationssystem nach Anspruch 9,
**dadurch gekennzeichnet, dass**
zur Übertragung der Aktivierungsinformation in dem Telekommunikationsnetz auf QSIG-Standard basierende IP-Gateways für den Zugang zum Internet eingerichtet sind.

11. Telekommunikationssystem nach Anspruch 9 oder 10,
**dadurch gekennzeichnet, dass** Verbindungen zur Übertragung der auf QSIG-Standard basierenden Meldungen QSIG-Festverbindungen und/oder QSIG-Wählverbindungen sind.

12. Telekommunikationssystem nach Anspruch 11,
**dadurch gekennzeichnet, dass**
die Verbindungen als D-Kanalverbindungen zur Übertragung von Signalisierungsdaten ausgebildet sind.

## Claims

1. Method of operation for a telecommunications system comprising a plurality of decentralized telephone exchange units (3, 4) allocated to a plurality of decentralized telecommunication exchanges (1, 2) within a telecommunication network whereby incoming calls are distributed to exchange units (3,4) wherein a central telecommunication exchange (5) renders a central call distribution,
**characterized in that**
activation is effected by activation information being transmitted by means of a SETUP message based on the QSIG standard from the central telecommunication exchange (5) to each of the decentralized telecommunication exchanges (1, 2) which, in reaction thereto, reroutes the incoming calls to the central telecommunication exchange (5) for forwarding to at least one central exchange unit (6) connected to said central telecommunication exchange (5).

2. Method in accordance with claim 1,
**characterized in that**
following activation, the activation information from one of a plurality of central exchange units (6) is transmitted from the central telecommunication exchange (5) to each of the decentralized telecommunication exchanges (1, 2).

3. Method in accordance with claim 1 or 2,
**characterized in that**
the calls rerouted from the central exchange unit (6) to the call-rerouting decentralized telecommunication exchanges (1, 2) are returned if the central call distribution in the central telecommunication exchange (5) is switched off.

4. Method in accordance with claim 3,
**characterized in that**
the call-rerouting decentralized telecommunication exchanges (1, 2) receive the information on the switched-off state of the central call distribution from the central telecommunication exchange (5) by means of a QSIG-standard DISCONNECT message.

5. Method in accordance with claim 4,
**characterized in that**
after receiving the information, incoming calls are forwarded to the decentralized exchange units (3, 4) and/or terminals without rerouting to the central telecommunication exchange (5).

6. Method in accordance with one of the preceding claims,
**characterized in that**
a zavActivate ROSE operation (14, 15) is used to send the activation information from the central telecommunication exchange (5) to the decentralized telecommunication exchanges (1, 2).

7. Method in accordance with one of claims 3 - 6,
**characterized in that**
a zavReturnCall ROSE operation (32, 33) is used to send back rerouted calls from the central telecommunication exchange (5) to the call-routing decentralized telecommunication exchanges (1, 2).

8. Method in accordance with one of the preceding claims,
**characterized in that**
the activation information is transmitted over a D channel connection as signalling data.

9. Telecommunications system for realizing the method according to one of the preceding claims,
**characterized by**
a performance feature realized by a central call distribution through a central telecommunication exchange, whereby a SETUP message based on the QSIG standard is used to transmit activation information for activating the central call distribution from said central telecommunication exchange (5) to the decentralized telecommunication exchanges (1, 2) such that, in reaction thereto, incoming calls to the decentralized telecommunication exchanges (1, 2) are rerouted to the central telecommunication exchange (5) for forwarding to at least one central exchange unit (6) connected to said central telecommunication exchange (5).

10. Telecommunications system in accordance with claim 9,
**characterized in that**
IP gateways based on the QSIG standard for accessing the Internet are provided for transmitting the activation information in the telecommunication network.

11. Telecommunications system according to claim 9 or 10,
**characterized in that**
the connections for transmitting the QSIG-standard messages are QSIG-dedicated and/or QSIG-switched connections.

12. Telecommunications system in accordance with claim 11,
**characterized in that**
the connections for transmitting signalling data are configured as D channel connections.

## Revendications

1. Procédé d'exploitation d'un système de télécommunication comportant une pluralité de dispositifs de transmission (3, 4) décentralisés à laquelle est affectée une pluralité d'installations de télécommunication (1, 2) disposées de façon décentralisées dans un réseau de télécommunication, des appels entrants étant répartis entre des dispositifs de transmission (3, 4), une répartition centrale des appels s'effectuant au moyen d'une installation de télécommunication (5) disposée centralement,
**caractérisé en ce que**
pour leur activation, une information d'activation est transmise au moyen d'un message SETUP reposant sur le standard QSIG, de l'installation de télécommunication (5) disposée centralement à chaque installation de télécommunication (1, 2) disposée de façon décentralisée, en réaction de quoi, les appels entrants sont détournés vers l'installation de télécommunication (5) disposée centralement pour être retransmis à au moins un dispositif central de transmission (6) relié à l'installation de télécommunication (5) disposée centralement.

2. Procédé selon la revendication 1,
**caractérisé en ce que**
l'information d'activation, après activation d'un dispositif central de transmission (6) parmi une pluralité, est transmise de l'installation de télécommunication (5) disposée centralement à chaque installation de télécommunication (1, 2) disposée de façon décentralisée.

3. Procédé selon la revendication 1 ou 2,
**caractérisé en ce que**
les appels détournés sont retournés par le dispositif central de transmission (6) à l'installation de télécommunication (1, 2) disposée de façon décentralisée qui détourne les appels, lorsque la répartition centrale des appels est déconnectée dans l'installation de télécommunication (5) disposée centralement.

4. Procédé selon la revendication 3,
**caractérisé en ce que**
l'installation de télécommunication (1, 2) disposée de façon décentralisée qui détourne les appels reçoit des données d'information sur la déconnexion de la répartition centrale des appels au moyen du message DISCONNECT reposant sur le standard QSIG de l'installation de télécommunication (5) disposée centralement.

5. Procédé selon la revendication 4,
**caractérisé en ce que**,
après réception des données d'information, des appels entrants sans détournement à l'installation de télécommunication (5) disposée centralement sont retransmis aux dispositifs de transmission (3, 4) décentralisés et/ou terminaux.

6. Procédé selon l'une quelconque des revendications précédentes,
**caractérisé en ce que**
l'information d'activation est envoyée au moyen d'une opération ROSE zavActivate (14, 15) de l'installation de télécommunication (5) disposée centralement aux installations de télécommunication (1, 2) disposées de façon décentralisée.

7. Procédé selon l'une quelconque des revendications 3 à 6,
**caractérisé en ce que**
les appels détournés sont retournés au moyen de l'opération ROSE zavReturnCall (32, 33) de l'installation de télécommunication (5) disposée centralement aux installations de télécommunication (1, 2) disposées de façon décentralisée qui détournent l'appel.

8. Procédé selon l'une quelconque des revendications précédentes,
**caractérisé en ce que**
l'information d'activation est transmise par une liaison par canal D en tant que données de signalisation.

9. Système de télécommunication pour appliquer le procédé selon l'une quelconque des revendications précédentes,
**caractérisé par**
une caractéristique de puissance qui réalise une répartition centrale d'appel au moyen d'une installation de télécommunication disposée centralement, une information d'activation pour activer la répartition centrale d'appel étant transmise au moyen d'un message SETUP reposant sur le standard QSIG de l'installation de télécommunication (5) disposée centralement à des installations de télécommunication (1, 2) disposées de façon décentralisée, de façon à, en réaction à cela, détourner des appels entrants aux installations de télécommunication (1, 2) disposées de façon décentralisée vers l'installation de télécommunication (5) disposée centralement pour retransmission vers au moins un dispositif central de transmission (6) relié à l'installation de télécommunication (5) disposée centralement.

10. Système de télécommunication selon la revendication 9,
**caractérisé en ce que**,
pour transmettre l'information d'activation dans le réseau de communication, des passerelles IP reposant sur le standard QSIG sont installées pour l'accès à Internet.

11. Système de télécommunication selon la revendication 9 ou 10,
**caractérisé en ce que**
des liaisons pour la transmission de messages reposant sur le standard QSIG sont des liaisons QSIG fixes ou des liaisons QSIG intermittentes.

12. Système de télécommunication selon la revendication 11,
**caractérisé en ce que**
les liaisons sont constituées en tant que liaisons par canal D pour la transmission de données de signalisation.
